# EUROPEAN PATENT APPLICATION

(11) **EP 2 805 702 A1**
(43) Date of publication of application: **26.11.2014**
(21) Application number: 12866140.2
(22) Date of filing: 06.12.2012
(51) Int. Cl.: A61G 7/05, G01G 19/52, G08B 25/04

(54) **BED WITH LOAD DETECTION FUNCTION, AND LOAD DETECTOR FOR BED**

(30) Priority: 20.01.2012 JP 2012010401
(71) Applicant: Showa Denko K.K., Tokyo 105-8518 (JP)
(72) Inventor: HIROSE Kazuo, Oyama-shi Tochigi 323-8678 (JP)
(74) Representative: Tack, Jens
(86) International application number: PCT/JP2012/081664
(87) International publication number: WO 2013/108502

(57) **Abstract**

An object of the invention is to provide a bed to which a load detection function is added with a simple structure, while suppressing an increase in the number of parts. The invention also provide a bed with a load detection function in which a load cell of a load detector is incorporated into a caster mechanism of a leg section in a bed body. Additionally, a load detector suitable for the bed is provided.

## Description

### BACKGROUND OF THE INVENTION

### Field of the Invention

The present invention relates to a bed with a load detection function that detects a change in the load applied to a bed body and detects the state of a user on a bed surface of the bed body, using a load detector attached to the bed body, and a load detector for adding a load detection function to a bed.

Priority is claimed on Japanese Patent Application No. 2012-10401 filed on January 20, 2012, the contents of which are incorporated herein by reference.

### Description of Related Art

For example, in beds to be used in medical institutions, nursing facilities, child care institutions, lodging facilities, ordinary homes, or the like, methods of detecting a change in the load applied to a bed body, and detecting the conditions (getting into bed, getting out of bed, positions while staying in bed, body motions, or the like) of a user (a sick person, a person to be cared, an infant, a healthy person, or the like) on a bed surface of the bed body are suggested (refer to Patent Documents 1 to 3).

Specifically, Patent Document 1 discloses a method of arranging a load sensor between a leg section provided at a bed body, and an installation surface (floor surface or the like) on which the bed body is installed, and detecting a person's situation while staying in bed on the basis of an electrical signal from the load sensor. Additionally, this load sensor is formed with a slope portion for guiding a caster provided on the leg section of the bed body from the installation surface of the bed body onto a load-receiving portion of the load sensor.

Patent Document 2 discloses a method of detecting the load applied to the bed body by providing a load detector in an empty space between the bed body and an installation surface on which the bed body is installed. Additionally, this load detector is provided with means for lifting a bed.

Patent Document 3 discloses that a frame of a bed has a double structure and a load cell (load detector) is incorporated into the structure.

### PRIOR ART DOCUMENTS

### Patent Documents

[Patent Document 1] Japanese Unexamined Patent Application, First Publication No. 2000-105884
[Patent Document 2] Japanese Unexamined Patent Application, First Publication No. 2008-304397
[Patent Document 3] Japanese Unexamined Patent Application, First Publication No. 2007-256074

### SUMMARY OF THE INVENTION

However, in the invention described in Patent Document 1, when the load of the bed body is detected using the load sensor, the caster provided on the leg section of the bed should be placed on the load-receiving portion of the load sensor after being moved to the vicinity of a front side of the slope portion of the load sensor and being passed above this slope portion. This is extremely troublesome.

In the invention described in Patent Document 2, for example, when a bed body is installed along a wall, an installer cannot enter a space between the bed body and the wall. Therefore, it is extremely difficult to arrange the load detector in the empty space between the bed body and the installation surface.

In the invention described in Patent Document 3, the load detector is incorporated into the bed body in advance, but the bed body should be designed for the load detector, and new parts therefor are required. For this reason, a bed with a load detection function will become extremely expensive. Moreover, it is difficult to achieve weight reduction due to the increase in the number of parts.

The invention has been made in view of such related-art circumstances, and an object of the invention is to provide a bed with a load detection function enabled to add a load detection function with a simple structure while suppressing an increase in the number of parts, and a load detector for a bed that is made to be simply and easily incorporated into a bed body in order to add such a load detection function to the existing bed.

In order to achieve the above object, the invention provides aspects described in the following (1) to (12).
(1) Provided is a bed with a load detection function that detects a change in a load applied to a bed surface of a bed body, using a load detector attached to the bed body, and detects a state of a user on the bed surface of the bed body. The bed body has a plurality of leg sections that make contact with a surface on which the bed body is to be installed. The leg sections are provided with caster mechanisms, respectively. The load detector has load cells that are incorporated into the caster mechanisms of one or more leg sections among the leg sections, and measure a strain caused by loads applied from the bed surface to the caster mechanisms.
(2) In the aspect of the bed with a load detection function stated in the above (1), the bed body has a bottom frame supported via the leg sections on an installation surface, the caster mechanism has a wheel that rotates around a horizontal axis, and a turning portion that turns the wheel around a vertical axis, and has a structure in which an upper end opening portion of a tube portion is closed by a top portion in a state where a shaft portion protruding from an upper portion of the turning portion is inserted into the tube portion provided at the bottom frame so as to be movable in an axis direction, and the load cell is arranged in a state where the load cell is sandwiched between the shaft portion and the top portion inside the tube portion.
(3) In the aspect of the bed with a load detection function stated in the above (2), the load cell is arranged above a position where the tube portion is connected to the bottom frame.
(4) In the aspect of the bed with a load detection function stated in the above any one of (2) and (3), any one of a lower end surface of the load cell and an upper end surface of the shaft portion has a flat surface, and the other has a convex surface, and the flat surface and the convex surface are brought into contact with each other on a central axis.
(5) In the aspect of the bed with a load detection function stated in the above any one of (2) to (4), a bush that guides the shaft portion so as to be movable in the axis direction is arranged between an inner peripheral surface of the tube portion and an outer peripheral surface of the shaft portion.
(6) In the aspect of the bed with a load detection function stated in the above any one of (1) to (5), four load cells are provided as the load cells, and the load cells are incorporated into caster mechanisms of four leg sections arranged at four corners of the bed body that are in a mutually symmetrical positional relationship.
(7) Provided is a load detector for a bed that is attached to a bed body having a plurality of leg sections, thereby measuring a change in a load applied to a bed surface of the bed body, and detecting a state of a user on the bed surface of the bed body. The load detector for a bed includes a load cell that measures strain caused by the load applied thereto. The load cells are configured so as to be capable of being incorporated into caster mechanisms provided at the leg sections.
(8) In the aspect of the load detector for a bed stated in the above (7), the caster mechanism has a wheel that rotates around a horizontal axis, and a turning portion that turns the wheel around a vertical axis, and has a structure in which an upper end opening portion of a tube portion is closed by a top portion, in a state that is a shaft portion protruding from an upper portion of the turning portion, is inserted into the tube portion provided at a bottom frame of the bed body so as to be movable in an axis direction, and the load cell is arranged in a state that is the load cell is sandwiched between the shaft portion and the top portion inside the tube portion.
(9) In the aspect of the load detector for a bed stated in the above (8), the load detecting part is arranged above a position where the tube portion is connected to the bottom frame.
(10) In the aspect of the load detector for a bed stated in the above any one of (8) and (9), any one of a lower end surface of the load cell and an upper end surface of the shaft portion has a flat surface, and the other has a convex surface, and the lower end surface of the load cell has a flat surface or a convex surface so that the flat surface and the convex surface are brought into contact with each other on a central axis of the shaft portion.
(11) In the aspect of the load detector for a bed stated in the above any one of (8) to (11), the caster mechanism includes a bush that is arranged between an inner peripheral surface of the tube portion and an outer peripheral surface of the shaft portion to guide the shaft portion so as to be movable in the axis direction.
(12) In the aspect of the load detector for a bed stated in the above any one of (7) to (11), four load cells are provided as the load cells, and the load cells are configured so as to be respectively arranged at caster mechanisms of four leg sections arranged at four corners of the bed body that are in a mutually symmetrical positional relationship.

As described above, according to the invention, it is possible to provide the bed with a load detection function enabled to add a load detection function with a simple structure while suppressing an increase in the number of parts, and the load detector for a bed that is enabled to be separately incorporated into the bed body in order to add such a load detection function to the existing bed.

### BRIEF DESCRIPTION OF THE DRAWINGS

FIG. 1 is a side view showing an example of a bed with a load detection function to which the invention is applied.
FIG. 2 is a partial vertical cross-sectional side view showing an example of a caster mechanism into which a load cell is incorporated.
FIG. 3A is a vertical cross-sectional side view of an example of the load cell incorporated into the caster mechanism shown in FIG. 2.
FIG. 3B is a cross-sectional plan view of the load cell taken along line III-III in FIG. 3A.
FIG. 4 is a circuit diagram showing a Wheatstone bridge circuit.
FIG. 5 is a partial vertical cross-sectional side view showing another example of the caster mechanism into which the load cell is incorporated.
FIG. 6 is a partial vertical cross-sectional side view showing still another example of the caster mechanism into which the load cell is incorporated.
FIG. 7A is a partial vertical cross-sectional view showing a portion of the caster mechanism and the load cell in an example of a case where an upper end surface of a shaft of the caster mechanism is a protruding surface.
FIG. 7B is a partial vertical cross-sectional view showing a portion of the caster mechanism and the load cell in another example of the case where the upper end surface of the shaft of the caster mechanism is the protruding surface.
FIG. 8A is a partial vertical cross-sectional view showing a sleeve and the shaft in an example of a case where a bush is arranged between the sleeve and the shaft of the caster mechanism.
FIG. 8B is a partial vertical cross-sectional view showing the sleeve and the shaft in another example of the case where the bush is arranged between the sleeve and the shaft of the caster mechanism.
FIG. 9A is a vertical cross-sectional view showing a bending sensitive load cell, as another example of the load cell to be used for the bed with a load detection function to which the invention is applied.
FIG. 9B is a cross-sectional plan view of the load cell taken along line VIX-VIX of FIG. 9A.
FIG. 10A is a vertical cross-sectional view showing a hollow cylindrical sensitive load cell, as still another example of the load cell to be used for the bed with a load detection function to which the invention is applied.
FIG. 10B is a cross-sectional plan view of the load cell taken along line X-X of FIG. 10A.

### DETAILED DESCRIPTION OF THE INVENTION

Hereinafter, the configuration of a bed with a load detection function and a load detector to which the invention is applied will be described with reference to the drawings. In addition, in the drawings to be used with the following description, characteristic portions may be shown in an enlarged manner for convenience and easy understanding of the invention's characteristics, and the dimensions of respective constituent elements are not necessarily drawn to scale. Additionally, materials, dimensions, and the like that are provided in the following description are merely examples, and the invention is not limited by these and can be appropriately changed and carried out insomuch as there is no departure from the scope of the invention.

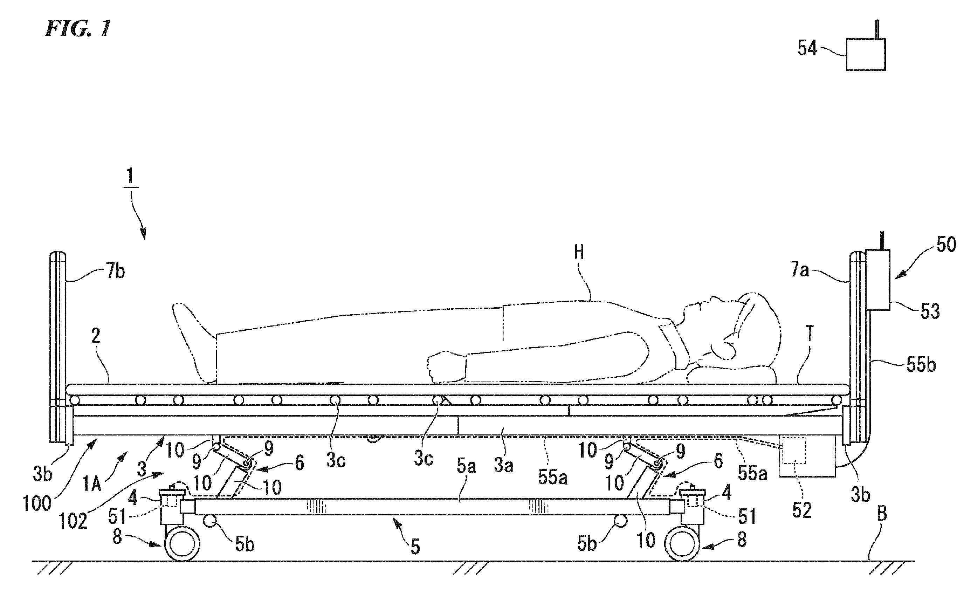

FIG. 1 is a side view showing an example of a bed 1 with a load detection function to which the invention is applied, that is, a side view of the bed 1 incorporating a load detector 50 for a bed according to a first example.

The bed 1 with a load detection function includes a bed body 1A installed, for example, on an installation surface B, such as a floor surface, and has the function of detecting a change in the load applied to the bed body 1 A and detecting the state of the user H on a bed surface T of the bed body 1A, using a load detector 50 attached to the bed body 1 A.

In addition, in the following description, the installation surface B and the bed surface T of the bed body 1 A shown in FIG. 1 are referred to as horizontal surfaces (surfaces orthogonal to the gravitational direction). Also, in a state where the user H goes to bed in a supine posture on the bed surface T of the bed body 1A, a head side of the user H is referred to as "a front side of the bed body 1A", a leg side of the user H is referred to as "a rear side of the bed body 1A", a right side of the user H is referred to as "a right side of the bed body 1A", and a left side of the user H is referred to as "a left side of the bed body 1A".

Specifically, the bed body 1 A is configured to generally include a bed surface forming section 100 that forms the bed surface T, a leg section 4 that makes contact with the installation surface B on which the bed body 1A is to be installed, and a coupling supporting section 102 that couples the bed surface forming section 100 and the leg section 4 and transmits the load from the bed surface forming section 100 toward the leg section 4 so that the bed surface forming section 100 is located above the installation surface B.

Here, in the example shown in FIG. 1, the bed surface forming section 100 is constituted by a bed plate 2, and a top frame 3 that supports the bed plate 2. Additionally, the coupling supporting section 102 includes a bottom frame 5, and the lifting link mechanism 6 that lifts and lowers the bed plate 2 together with the top frame 3 while coupling the top frame 3 and the bottom frame 5.

The bed plate 2 is made of a rectangular plate having a length and a width that are sufficient for the user H to go to bed on.

In the bed body 1A, the user H is enabled to stay on the bed plate 2 in a state where, for example, a mattress, a sleeping mat, or the like is laid on the bed plate. (In addition, in FIG. 1, a state where the user H directly lies on one's side on an upper surface (bed surface T) of the bed plate 2 is shown).

The top frame 3 has the structure (frame structure) in which a pair of left and right pipe frames 3a extending in a length direction (longitudinal direction of the bed body 1 A) of the bed plate 2 and a pair of front and rear pipe frames 3b extending in a width direction (lateral direction of the bed body 1A) of the bed plate 2 are coupled together in the shape of a frame as a whole, and a plurality of pipe frames 3c extending in the width direction (lateral direction of the bed body 1A) of the bed plate 2 are connected with the pair of left and right pipe frames 3 a in a state where the pipe frames 3c are lined up in the length direction (longitudinal direction of the bed body 1A) of the bed plate 2.

Also, the bed plate 2 is attached in a state where the bed plate is fixed on the plurality of pipe frames 3c. Additionally, a head plate 7a and a foot plate 7b are respectively attached to the pair of front and rear pipe frames 3b constituting the top frame 3, in a state where these plates are erected vertically upward.

Four leg sections 4 are arranged at four corners (the front left side, the front right side, the rear left side, and the rear right side) of the bed body 1 A that is in a mutually symmetrical positional relationship. Additionally, the four leg sections 4 are respectively provided with caster mechanisms 8 for facilitating the movement of the bed body 1A that is a heavy object. In addition, the specific configuration of the caster mechanism 8 itself is not particularly limited.

The bottom frame 5 has the structure (frame structure) in which the pair of left and right pipe frames 5a extending in the longitudinal direction of the bed body 1 A and the pair of front and rear pipe frames 5b extending in the lateral direction of the bed body 1 A are coupled together in the shape of a frame as a whole. Also, the leg sections 4 (caster mechanisms 8) are respectively provided at both ends of the pair of left and right pipe frames 5a that constitute the bottom frame 5.

A pair of the lifting link mechanisms 6 are arranged side by side on the front side and the rear side of the bed body 1A. The lifting link mechanism 6 has a plurality of coupling arms 10 that are rotatably coupled to each other via a hinge portion 9 between the top frame 3 and the bottom frame 5, and the plurality coupling arms 9 operate to lift and lower the bed plate 2 by driving an actuator (not shown) attached to the top frame 3 while cooperating with each other. Accordingly, it is possible to adjust the height of the bed plate 2.

In addition, the front and rear lifting link mechanisms 6 basically have the same structure except that the attachment positions thereof are different from each other. Moreover, the front and rear lifting link mechanisms 6 have a bilaterally symmetrical structure between the right side and the left side of the bed body 1A, respectively.

In addition, here, lifting link mechanisms 6 by using the swing lifting system are shown as an example of the lifting mechanisms for lifting and lowering the bed plate 2. However, other link mechanisms, for example, a pantagraph system and lifting mechanisms that do not use the link mechanisms, for example, mechanisms by using a manual or electric rotary screw system (screw system), mechanisms by using a vertical lifting system, such as a jack system or the like can be applied as the lifting mechanisms. Moreover, as will be described below anew, the bed body may not have the lifting mechanisms for lifting and lowering the bed plate 2.

The load detector 50 has a load cell 51 that measures the strain generated by a load being applied to the bed body 1 A. Moreover, in the present embodiment, as shown in FIG. 1, the load detector includes, in addition to the load cell 51, a computing unit 52 that computes the state of the user H on the bed surface T of the bed body 1A on the basis of a load signal output from the load cell 51, a transmitting unit 53 that remotely transmits a result computed by the computing unit 52, and a receiving unit 54 that receives a signal transmitted from the transmitting unit 53.

In addition, the load cell 51 and the computing unit 52 are electrically connected to each other by wiring line 55a, and the computing unit 52 and the transmitting unit 53 are electrically connected to each other by a wiring line 55b. In addition, transmission and reception are enabled between the transmitting unit 53 and the receiving unit 54 by radio (electric wave).

Incidentally, the bed 1 with a load detection function to which the invention is applied is characterized by the aforementioned load cell 51 being incorporated into the caster mechanism 8.

Specifically, (a total of four) load cells 51 are respectively arranged at the caster mechanisms 8 at the above-described four corners (the front left side, the front right side, the rear left side, and the rear right side).

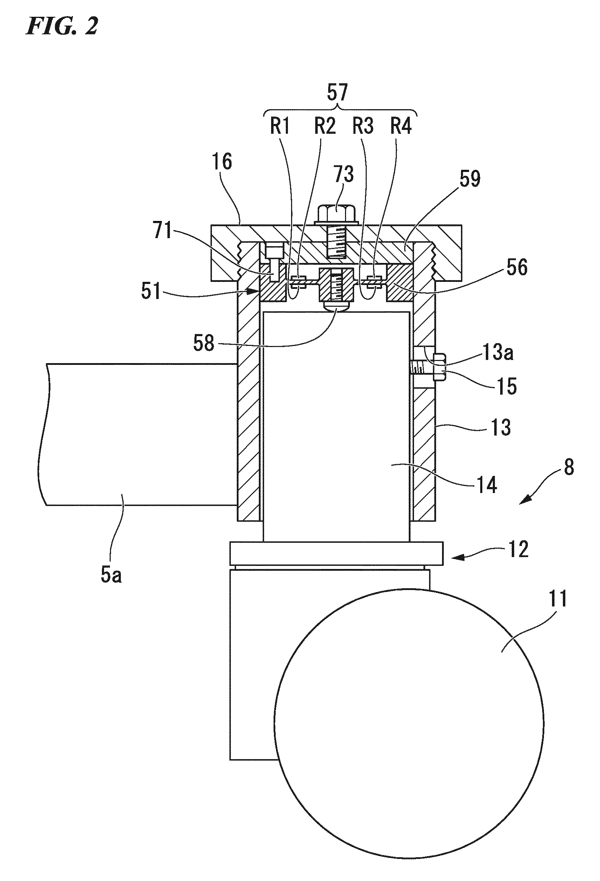

Additionally, the four load cells 51 basically have the same structure except that the arrangements thereof are different from each other. Accordingly, the four load cells 51 will be collectively described, for example, as shown in FIG. 2.

FIG. 2 shows one caster mechanism 8 into which the load cell 51 is incorporated.

Each caster mechanism 8 has a roller (wheel) 11 that rotates around a horizontal axis, and a free metal fitting (turning portion) 12 that turns the wheel 11 around a vertical axis. Additionally, the caster mechanism 8 is brought into a state where a sleeve (tube portion) 13 is provided at a tip portion of a pipe frame 5a that constitutes the bottom frame 5, and a shaft (shaft portion) 14 protruding from an upper portion of the turning portion 12 is inserted into the sleeve 13 so as to be movable in an axis direction.

In addition, in the caster mechanism 8 shown in FIG. 2, a side surface of the sleeve 13 is provided with a hole portion 13a, and a screw 15 passing through the hole portion 13a is screwed to the shaft 14, thereby retaining the shaft 14 with respect to the sleeve 13.

Moreover, the caster mechanism 8 has the structure in which an upper end opening portion of the sleeve 13 is closed by a cap (top portion) 16. The cap 16 is attached by, for example, means, such as screwing, in a state where the cap is covered on the upper end portion of the sleeve 13.

The load cell 51 is arranged in a state where the load cell is sandwiched between the shaft 14 and the cap 16 inside the sleeve 13. Additionally, the load cell 51 is arranged above a position where the sleeve 13 is connected to the pipe frame 5a (bottom frame 5).

The load cell 51 is referred to as a linear needle sensitive type load cell, has an elastic body 56 that is deformed by an applied load and in which strain (tensile strain and compressive strain) is caused, and a strain sensor 57 that is attached to the elastic body 56 so as to detect the strain of the elastic body 56, and is attached to the rear surface of the cap 16 by, for example, means, such as a screw 73.

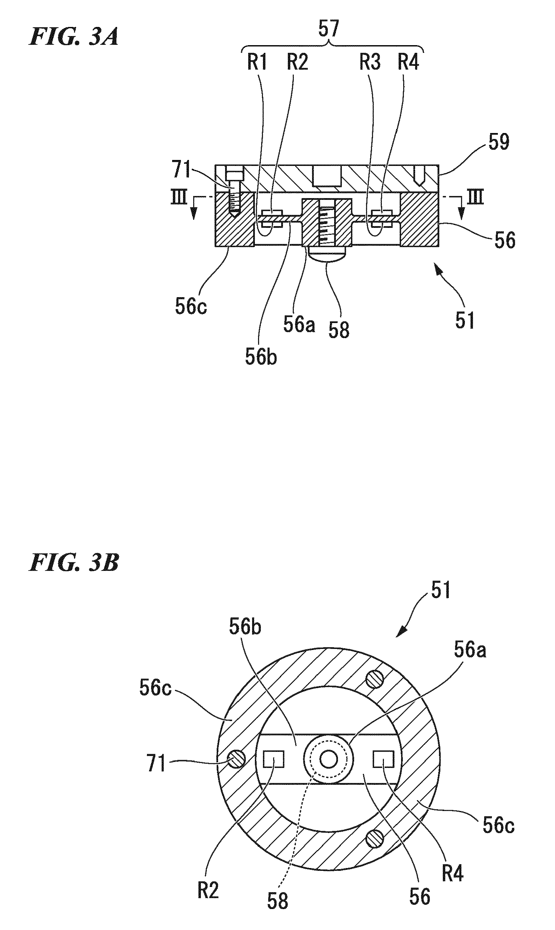

The details of the load cell 51 incorporated into the caster mechanism 8 shown in FIG. 2 are shown in FIGS. 3A and 3B.

The elastic body 56, as shown in FIG. 3A and FIG. 3B, is constituted by an intermediate thin portion 56b that couples a thick portion 56a on an inner peripheral side thereof and a thick portion 56c on an outer peripheral side thereof together in a diameter direction. When a load in an up-and-down direction (vertical direction) is applied to the thick portion 56a on the inner peripheral side, the intermediate thin portion 56b is elastically displaced, and the tensile strain or compressive strain is generated on the surface of the thin portion 56b, whereby a so-referred to as diaphragm is formed. Additionally, a protruding portion (protruding surface, convex surface) 58 is attached to a central portion of a lower surface of the elastic body 56 by, for example, screw stopping or the like, in a state where the protruding portion protrudes from below.

Additionally, a spacer 59 for adjusting the thickness of the elastic body is integrally attached to an upper surface of the elastic body 56 by, for example, screws 71 so that the protruding portion 58 is brought into a state where the protruding portion comes into contact with a flat upper end surface of the shaft 14 on a central axis of the sleeve (tube portion) 13 when the elastic body is sandwiched between the shaft 14 and the cap 16.

The strain sensor 57 detects changes in resistance according to the magnitude of the strain caused in the intermediate thin portion 56b of the elastic body 56. The strain sensor 57 includes, for example, four strain gauges (strain sensitive resistors) R1, R2, R3, and R4. The strain gauges R1, R2, R3, and R4 are arranged side by side in pairs, in a state where the strain gauges face each other on both surfaces of the thin portion 56b of the elastic body 56, at positions symmetrical to each other across the central axis of the elastic body 56.

In addition, although the materials of the elastic body 56 are not limited, for example, metals such as an aluminum alloy, iron, steel, and stainless steel, and other resins such as engineering plastic can be used.

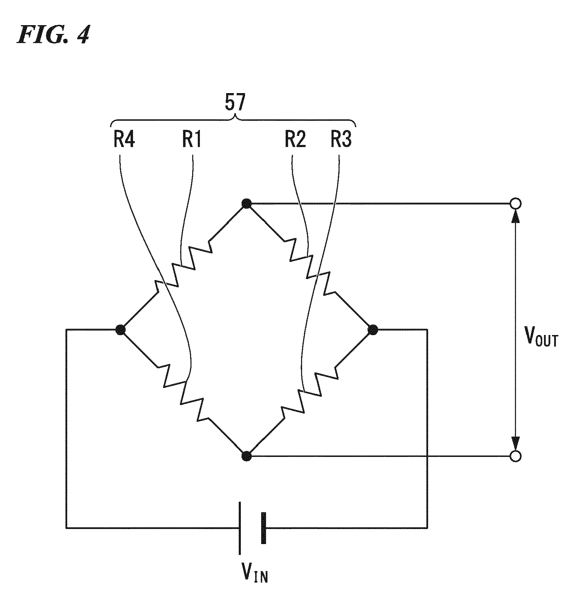

The strain gauges R1, R2, R3, and R4 of the strain sensor 57 are adhered to the intermediate thin portion 56b of the elastic body 56, and indicate changes in the resistance according to the direction (tension or compression) and magnitude of the strain caused on the surface of the thin portion 56b. The four strain gauges R1, R2, R3, and R4 constitute the Wheatstone bridge circuit as shown in FIG. 4. Among these strain gages, R1 and R3 are strain gauges on a compression side, and R2 and R4 are strain gauges on a tension side. Also, this Wheatstone bridge circuit is enabled to output an output voltage V_{OUT} (strain signal = load signal) according to the magnitude of the strain caused in the thin portion 56b of the elastic body 56 with respect to an input voltage V_{IN} (constant).

In addition, the load cell 51 may have a configuration in which at least two or three strain gauges are arranged. In this case, one or two strain gauges among the strain gauges R1, R2, R3, and R4 constituting the Wheatstone bridge circuit shown in FIG. 4 may be substituted with a dummy resistor as a resistor that has no strain sensitivity.

Also, in the load cell 51, when a load is applied to the bed body 1A, and the shaft 14 enters the inside of the sleeve 13, whereby a vertical upward load is applied to the elastic body 56 via the protruding portion 58 that comes into contact with the upper end surface of the shaft 14. At this time, strain is caused in the thin portion 56b of the elastic body 56, and the strain gauges R1, R2, R3, and R4 of the strain sensor 57 indicate changes in resistance according to the magnitude of the strain caused in the thin portion 56b of the elastic body 56, and outputs a strain signal according to the magnitude of the strain caused in the thin portion 56b of the elastic body 56, that is, a signal corresponding to changes in load (load signal) from the Wheatstone bridge circuit. In this way, a change in the load applied to the bed surface forming sections 100, such as the bed plate 2, can be detected by the load detector 50 including the load cell 51.

Additionally, in the load detector 50, changes in the loads applied to the four corners of the bed body 1A are detected by the total of four load cells 51 incorporated into the caster mechanism 8 at the four corners (the front left side, the front right side, the rear left side, and the rear right side) of the bed body 1A. Also, load signals detected by the four load cells 51 are output to the computing unit 52.

The computing unit 52 includes a computer that has a ROM, a RAM, other memories, a CPU, or the like, and has programs, numerical values, or the like required to calculate the state of the user H on the bed surface T of the bed body 1A stored in advance.

Also, in the computing unit 52, the state of the user H on the bed surface T of the bed body 1A is computed on the basis of the load signals output from the four load cells 51, and computation results are output to the transmitting unit 53.

For example, the computing unit 52 determines, from the load signals output from the four load cells 51, that the user H stays on the bed surface T of the bed body 1A when a total value of the loads applied to the four load cells 51 is greater than a threshold value stored in advance, and outputs the computation results to the transmitting unit 53.

In addition, the computing unit 52 is also enabled to perform the computation of predicting the getting-out-of-bed (bed leaving) of the user H, for example, from the movement distance and/or movement speed of the center of gravity of the user H on the bed surface T of the bed body 1A, in addition to the getting-into-bed (going-to-bed) and getting-out-of-bed (getting up) of the user H. Moreover, it is possible to detect the body motions (examples: tossing about in bed or the like), postures (examples: lying on one's back, lying on one's stomach, lying on one's side, or the like), a bedsore, or the like of the user H throughout the computation.

The transmitting unit 53, which is a transmitter attached to the bed body 1A, transmits the result computed by the computing unit 52 to the remote receiving unit 54. Additionally, the receiving unit 54, which is a receiver that receives a signal transmitted from the transmitting unit 53, is enabled to receive the signal from the transmitting unit 53 and to thereby monitor the state of (situation while staying in bed) of the user H from a remote place.

Additionally, on the receiving unit 54 side, it is also possible to display the detection results detected by the load cells 51 and the computation results obtained by the computing unit 52, for example, on a monitor (not shown) or to output the results to a printer.

Additionally, for example, an observer may be notified of the state of the user H if necessary based on the computation results obtained by the computing unit 52. Methods for the notification are not particularly limited. For example, it is possible to issue an alarm from a loudspeaker (not shown) or to perform display on a monitor.

The bed 1 with a load detection function having the structure as described above is preferably used in, for example, medical facilities (examples: hospitals, clinics, or the like), nursing facilities, child care institutions, or the like. That is, the bed 1 with a load detection function is preferably used, for example, when an abnormality has occurred such that the user H, such as a patient (example: a sick person, an infant, or the like) or a person to be cared for (example: the elderly, the handicapped, or the like), falls from the bed, and is unable to get up by themselves, or when the monitoring of the user H is required.

In the invention, it is possible to use such a bed 1 with a load detection function, thereby monitoring, for example, the state (situation while staying in bed) of the user H, such as getting into bed (going to bed), getting out of bed (getting up), positions while staying in bed, body motions (examples: tossing about in bed or the like), postures (examples: lying on one's back, lying on one's stomach, lying on one's side, or the like) from a remote place. Additionally, it is possible to use such a bed 1 with a load detection function, thereby reducing the mental burden of the user H of being monitored by someone and the physical or mental burden of an observer that should monitor the user H constantly without being limited to not only midnight but also early morning.

In addition, such a bed 1 with a load detection function is not used as being limited to the above-described facilities (institutions). For example, such a bed is also available in lodging facilities (examples: hotels, inns, or the like), ordinary homes (fop home care or the like), or the like. That is, the utility of the bed 1 with a load detection function is not particularly limited.

An application example using the load detection function of the bed 1 with a load detection function to which the invention is applied may include, for example, a "bedsore preventing function". Specifically, when the user H does not move out of a certain circle with a center-of-gravity position beyond a certain period of time (for example, 2 hours) or when a load change in each load cell 51 does not occur beyond a certain value (for example, 1 kg), it is possible to add the function of determining that a bedsore may occur in the user H and notifying the observer of the bedsore.

Additionally, another application example may include an "illumination control function". Specifically, when measuring the presence/absence of weight, the center of gravity, the movement distance of the center of gravity, the movement speed of the center of gravity, or the like regarding the user H on the bed surface T of the bed body 1A, it is possible to add the function of turning on or turning off illumination when the user gets into bed or gets out of bed.

Additionally, still another application example may include a "weight control function". Specifically, when periodically measuring the weight of the user H on the bed surface T of the bed body 1A (for example, at a fixed time every day), it is possible to add the function to perform the weight control of the user H.

Additionally, another application example may include an "air-conditioning control function". Specifically, when detecting the body motions (tossing about in bed or the like) of the user H on the bed surface T of the bed body 1A, it is possible to add the function of measuring the sleep depth of the user H and managing air-conditioning according to the state of the user.

Additionally, another application example may include a "weight monitoring function during dialysis". Specifically, by measuring the weight of the user H on the bed surface T of the bed body 1A, it is possible to add the function of detecting the start and end of dialysis.

In this way, the invention is not limited to the above-described functions, and it is also possible to use the load detection function of the bed 1 with a load detection function to thereby add various functions.

Additionally, in the invention, the load cell 51 of the load detector 50 may be incorporated into the caster mechanism 8 of the bed body 1A in advance (for example, during manufacture of the bed), or a load detection function may be added to the existing bed by separately incorporating the load cell 51 of the load detector 50 into the caster mechanism 8 of the established or existing bed body 1 A without the load detector 50.

That is, the bed with a load detection function to which the invention is applied is enabled to measure a change in the load applied to the bed body 1A, using the load detector 50 attached in advance or separately attached to the bed body 1A, thereby detecting the state of the user H on the bed surface T of the bed body 1 A.

Additionally, in the invention, by attaching to the bed body 1 A of the load detector 50 to which the invention is applied, it is possible to add the load detection function to the bed with a simple structure while suppressing an increase in the number of parts.

Specifically, in the load detector 50 to which the invention is applied, it is possible to easily incorporate the load cell 51 into the caster mechanism 8 of the existing bed.

That is, in the invention, simply by incorporating the load cells 51 into the four caster mechanisms 8 arranged at the four corners (the front left side, the front right side, the rear left side, and the rear right side) of the bed body 1A, it is possible to easily configure the bed body 1 A with a load detection function. Specifically, in the aforementioned example, the load detector 50 can be easily incorporated into the bed body 1A simply by arranging the load cell 51 between the shaft (shaft portion) 14 and the cap (top portion) 16 in the caster mechanism 8, and thereby, a load detection function can be easily given to the existing bed at a low cost.

Additionally, even when a failure or the like occurs in the load cell 51, it is possible to easily replace the load cell 51. Moreover, since there is little difference from the existing bed, it is possible for the user H to use the bed without feeling uncomfortable.

In addition, the invention is not necessarily limited to the above embodiment, and various changes can be made without departing from the scope of the invention.

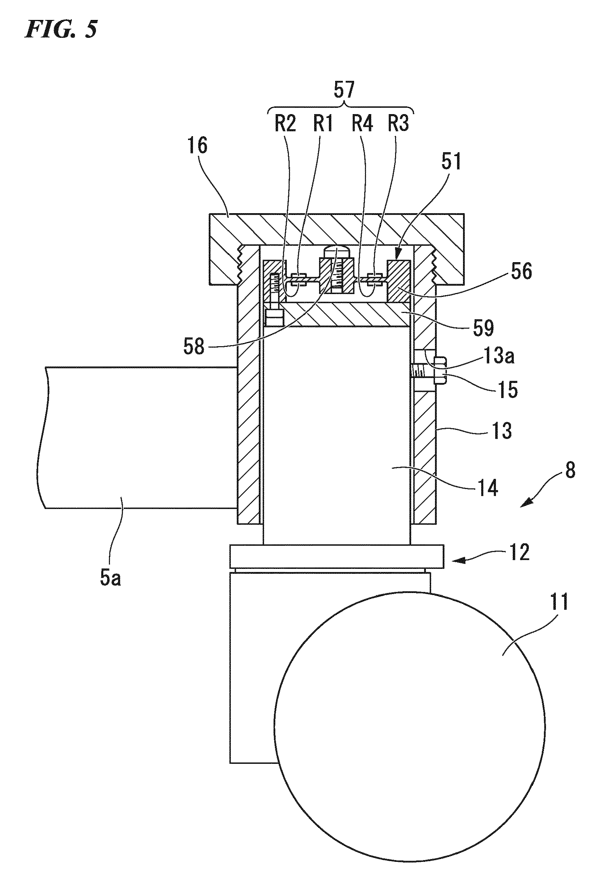

For example, in the example shown in FIG. 2, the load cell 51 is arranged so that the protruding portion 58 protrudes downward, and is configured so that a lower end of the protruding portion 58 makes contact with the upper end surface of the shaft (shaft portion) 14. However, conversely, as shown in FIG. 5, the load cell may be arranged so that the protruding portion 58 protrudes upward, and may be configured so that the upper end of the protruding portion 58 makes contact with a lower surface of the cap (top portion) 16. In the case of the arrangement configuration shown in FIG. 5, the load cell 51 may be fixed to the upper end surface of the shaft (shaft portion) 14 by a screw (not shown). However, the load cell may not fixed to the shaft 14 but may simply be placed on the upper end surface of the shaft 14.

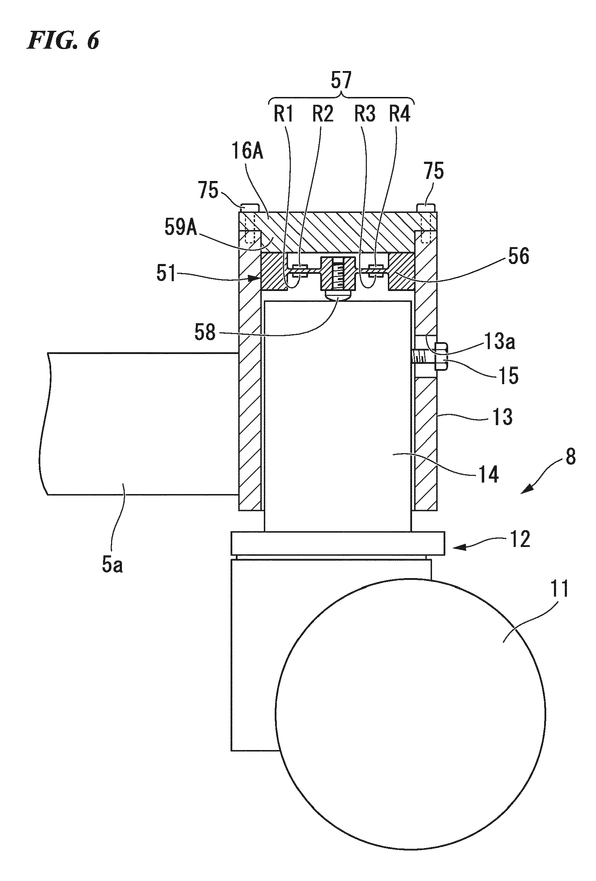

In the invention, as for, the caster mechanism 8 into which the load cell 51 is incorporated, it is also possible to adopt, for example, a configuration as shown in FIG. 6. Specifically, in the configuration shown in FIG. 6, the spacer 59 in FIG. 2 is omitted, and a cap 16A in which a spacer portion 59A is integrally formed is attached to an upper end of the sleeve (tube portion) 13 with, for example, screws 75 instead of the cap 16 in FIG. 2.

In addition, a configuration other than the above configuration is the same as the configuration shown in FIG. 2. Therefore, in FIG. 6, the same portions as those of the configuration shown in FIG 2 will be designated by the same reference numerals, and the description thereof will be omitted.

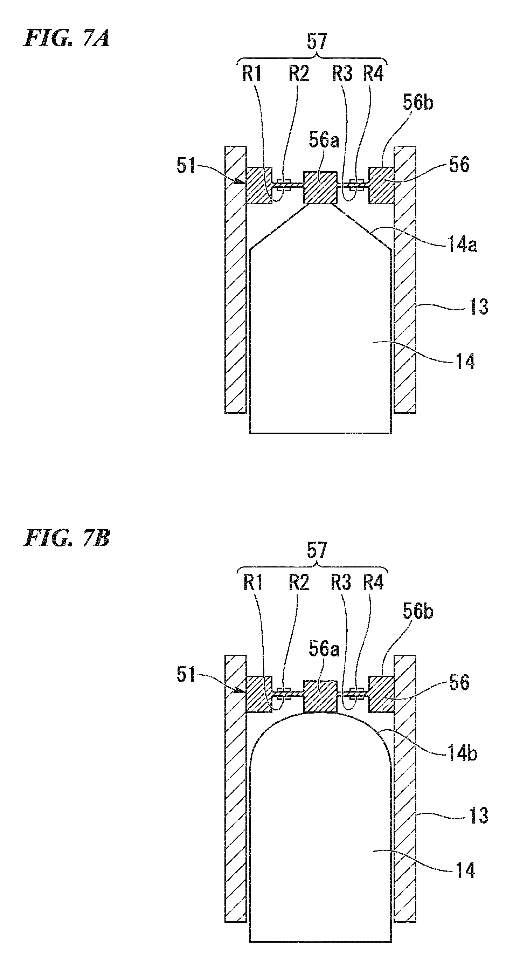

Additionally, although a configuration in which the protruding portion 58 is provided on the lower end surface of the load cell 51 and the protruding portion 58 comes into contact with the flat upper end surface of the shaft 14 on the central axis of the sleeve (tube portion) 13 is shown in FIGS. 2 and 5, the invention is not limited to this. For example, as shown in FIGS. 7A and 7B, it is also possible to omit the protruding portion 58 and adopt a configuration in which a tip of the upper end surface of the shaft 14 is a substantially conical protruding surface 14a (FIG. 7A) or a substantially spherical protruding surface 14b (FIG. 7B), and the protruding surfaces 14a and 14b come into contact with the flat lower end surface in the central thick portion 56a of the elastic body 56 of the load cell 51 on the central axis of the sleeve (tube portion) 13.

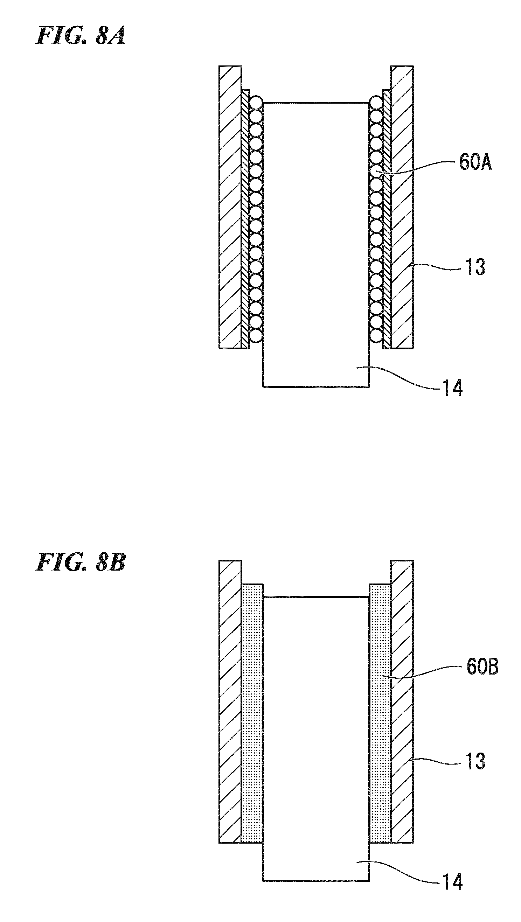

Additionally, as shown in FIGS. 8A and 8B, it is also possible to adopt a configuration in which bushes 60A and 60B, which guide the shaft 14 between the inner peripheral surface of the sleeve 13 and the outer peripheral surface of the shaft 14 so as to be movable in the axis direction, are arranged. The bush 60A of these bushes is a linear bush. In addition, the bush 60B is an oilless bush.

By arranging the bushes 60A and 60B between the inner peripheral surface of the sleeve 13 and the outer peripheral surface of the shaft 14 in this way, it is possible to smoothly move the shaft 14 in the axis direction (vertical direction), without causing rattling between the sleeve 13 and the shaft 14 when a load is applied to the bed body 1A.

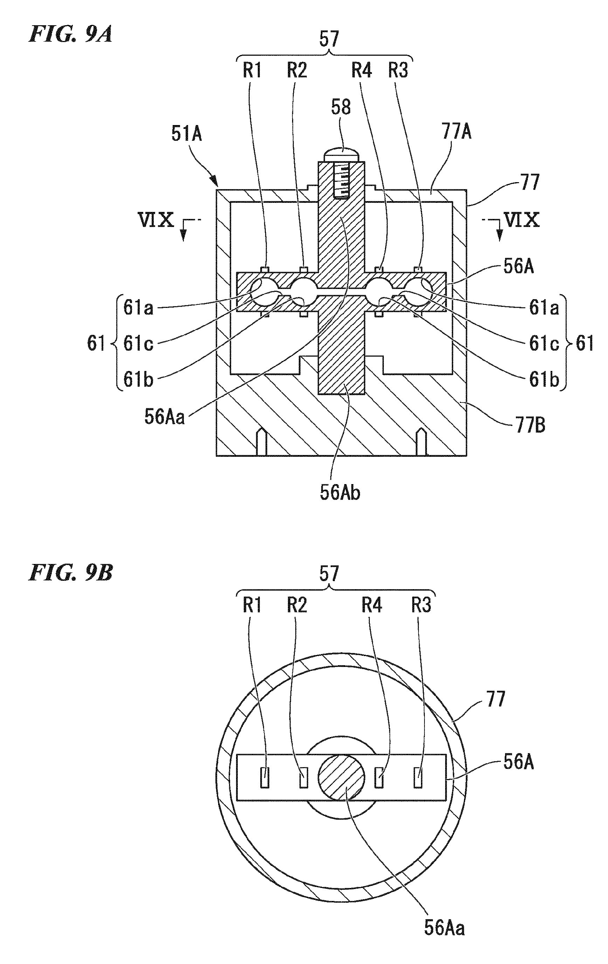

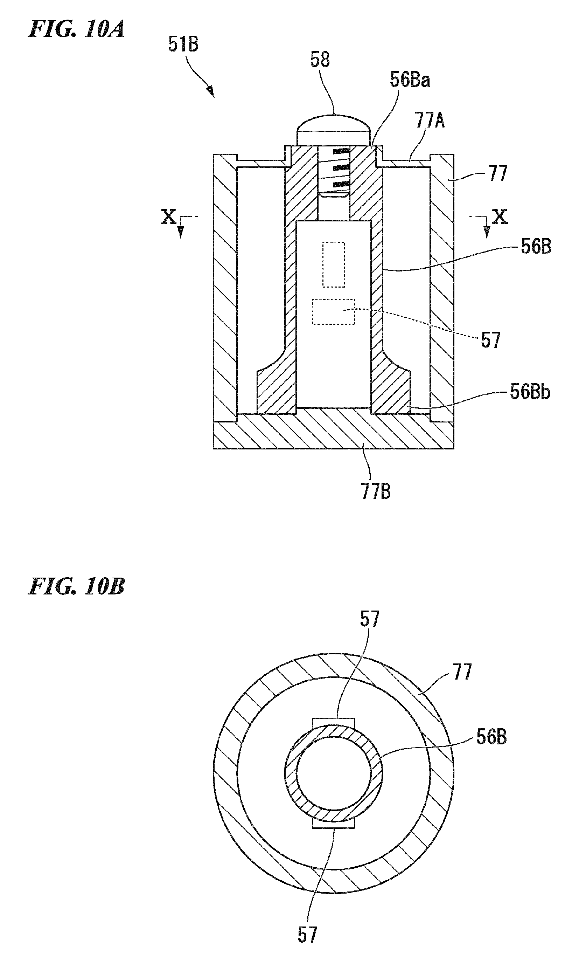

Additionally, the load cell to be used in the invention is not limited to the linear needle sensitive type load cell 51 shown in FIGS. 3A and 3B. For example, a load cell 51 A as shown in FIGS. 9A and 9B or a load cell 51B as shown in FIGS. 10A and 10B may be used.

The load cell 51A shown in FIGS. 9A and 9B is referred to as a bending sensitive type load cell, and a elastic body 56A accommodated within a case 77 is provided with a hole portion 61 for constituting a Roberval mechanism. The hole portion 61 is configured to include a pair of circular holes 61a and 61b that are lined up horizontally in a length direction of the elastic body 56A in a state where these holes pass through the elastic body 56A in a width direction, and a connecting hole 61c that connects the centers of the pair of circular holes 61a and 61b together. Additionally, a pair of the hole portions 61 are arranged at positions that are symmetrical to each other across the central axis of the elastic body 56A.

The strain gauges R1, R2, R3, and R4 that constitute the strain sensor 57 are respectively arranged along side by side in a longitudinal direction of the elastic body directly above positions where the pairs of circular holes 61a and 61b of the elastic body 56A are formed. In addition, a central shaft portion 56Aa, having the protruding portion 58 out of central shaft portions 56Aa and 56Ab in the elastic body 56A vertically separated from each other, is made to be vertically movable with respect to an upper wall portion 77A of the case 77, and a central shaft portion 56Ab that does not have the protruding portion 58 is fixed to a high-rigidity lower wall portion 77B of the case 77.

Additionally, as the four strain gauges R1, R2, R3, and R4 constitute the Wheatstone bridge circuit that is already described and shown in FIG. 4, it is possible to output the output voltage V_{OUT} (load signal) according to the magnitude of the strain caused in the elastic body 56A with respect to the input voltage V_{IN} (constant).

In addition, in FIG. 9A and FIG. 9B, the load cell 51 A is shown in a state where the protruding portion 58 of the elastic body 56A is turned upward. However, in incorporating the load cell 51A into the caster mechanism 8 of the bed body 1A, it goes without saying that the load cell may be incorporated into the caster mechanism 8 in a state where the protruding portion 58 is turned downward, according to the configuration shown in FIG. 2, or the load cell may be incorporated into the caster mechanism 8 in a state where the protruding portion 58 is turned upward, according to the configuration shown in FIG. 5.

In addition, the load cell 51B shown in FIGS. 10A and FIG. 10B is referred to as a hollow cylindrical sensitive type, includes a hollow cylindrical elastic body 56B accommodated in the case 77, and has a configuration in which a pair of strain gauges 57 that face each other are arranged on an outer peripheral surface of the elastic body 56.

In this case, an upper end portion (an end portion having the protruding portion 58) 56Ba and a lower end portion (an end portion having the protruding portion 58) 56Bb of the hollow cylindrical elastic body 56B are fixed to an elastically deflection-deformable upper wall portion 77A in the case 77, and the lower end portion (the end portion having no protruding portion 58) 56Bb is fixed to the high-rigidity lower wall portion 77B of the case 77.

In addition, in FIG. 10A and FIG. 10B, the load cell 51B is shown in a state where the protruding portion 58 of the elastic body 56A is turned upward. However, in incorporating the load cell 51B into the caster mechanism 8 of the bed body 1A, it goes without saying that the load cell may be incorporated into the caster mechanism 8 in a state where the protruding portion 58 is turned downward, according to the configuration shown in FIG. 2, or the load cell may be incorporated into the caster mechanism 8 in a state where the protruding portion 58 is turned upward, according to the configuration shown in FIG. 5.

Although the load cells 51, 51 A, and 51B as described above have a configuration in which the strain sensor 57 including the strain gauges R1, R2, R3, and R4 that are strain sensitive resistors is used as the strain sensor detecting the magnitude of strain, the load cell is not limited to such strain sensitive resistors. For example, a conductive elastomer sensor, an optical strain sensor, an electrostrictive device sensor, a piezoelectric device sensor, a magnetostrictive device sensor, or the like can be used as the strain sensor.

Additionally, the bed body 1A may be obtained by laying a mattress or the like in advance on the bed plate 2. Additionally, the bed plate 2 may have the structure in which the bed plate is split in a length direction (longitudinal direction of the bed body 1A) thereof, and may have a reclining function in which a portion of the user H on an upper body side or a leg side rises. Moreover, as for the top frame 3 and the bottom frame 5, it is possible to adopt not only the above-described frame structure but also various frame structures.

Additionally, the load detector 50 may adopt the configuration in which electrical connection is made between the above described load cell 51 and the computing unit 52 and between the above-described computing unit 52 and transmitting unit 53 by the wiring lines 55a and 55b but also may have a configuration in which electrical connection is made by radio. In addition, as methods for communication between the transmitting unit 53 and the receiving unit 54, not only the method using the above-described radio communication network, but also a method using a wire communication network may be used. Moreover, in the load detector 50, it is also possible to integrally form the computing unit 52 and the above transmitting unit 53.

In addition, in the aforementioend example shown in FIG. 1, the lifting link mechanism 6 is configured to be provided at the coupling supporting section 102 between the top frame 3 and the bottom frame 5. However, even when the lifting link mechanism 6 is not provided at the coupling supporting section 102, the load cell 51 can be incorporated into the caster mechanism 8 of the leg section 4.

Additionally, when the lifting link mechanism 6 is not provided, the bottom frame 5 may be omitted. Even in this case, it goes without saying that the load cell 51 can be incorporated into the caster mechanism 8 of the leg section 4.

In addition, in the example of FIG. 1, the bed surface forming section 100 that forms the bed surface T in the bed body 1A is constituted by the bed plate 2, and the top frame 3 that supports the bed plate 2. However, depending on the case, the bed surface forming section 100 may be one that does not have the top frame 3, that is, one including only the bed plate 2. It goes without saying that the invention can also be applied to this case.

Additionally, similar to the above, when the bed surface forming section 100 is one that does not have the top frame 3, that is, one including only the bed plate 2, there is also a bed body configured such that the lifting link mechanism 6 is provided at the coupling supporting section 102 for supporting the bed plate 2 so as to directly lift and lower the bed plate 2. It goes without saying that the invention can also be applied to such a case.

Moreover, even if the bed surface forming section 100 includes the top frame 3, there is also a bed body in which the top frame 3 merely functions as an enclosure, and the lifting link mechanism 6 is configured to lift and lower the bed plate 2 directly. Even in such a case, it goes without saying that the invention can be applied.

### INDUSTRIAL APPLICABILITY

The bed with a load detection function according to the invention can be used in medical facilities (examples: hospitals, clinics, or the like), nursing facilities, child care institutions, other lodging facilities (examples: hotels, inns, or the like), ordinary homes (for home care or the like), or the like. In that case, it is possible to detect the loads applied to the bed, thereby monitoring, for example, the state (situation while staying in bed) of a bed user, such as getting into bed (going to bed), getting out of bed (getting up), a staying-in-bed position, body motions (examples: tossing about in bed or the like), postures (examples: lying on one's back, lying on one's stomach, lying on one's side, or the like), or a bedsore. Additionally, the load detector for a bed according to the invention can be incorporated not only into a new bed but into the existing bed. Even in such a case, the above functions can be exhibited.

### REFERENCE SIGNS LIST

1: BED WITH LOAD DETECTION FUNCTION
1A: BED BODY
2: BED PLATE
3: TOP FRAME
4: LEG SECTION
5: BOTTOM FRAME
6: LIFTING LINK MECHANISM
8: CASTER MECHANISM
11: ROLLER (WHEEL)
12: FREE METAL FITTING (TURNING PORTION)
13: SLEEVE (TUBE PORTION)
14: SHAFT (SHAFT PORTION)
16, 16A: CAP (TOP PORTION)
50: LOAD DETECTOR
51, 51A, 51B: LOAD CELL
52: COMPUTING UNIT
53: TRANSMITTING UNIT
54: RECEIVING UNIT
56, 56A, 56B: ELASTIC BODY
57: STRAIN SENSOR
60A, 60B: BUSH
61: HOLE PORTION (ROBERVAL MECHANISM)
B: INSTALLATION SURFACE
T: BED SURFACE
H: USER
R1, R2, R3, R4: STRAIN GAUGE (STRAIN SENSITIVE RESISTOR)

## Claims

1. A bed with a load detection function that detects a change in a load applied to a bed surface of a bed body, using a load detector attached to the bed body, and detects a state of a user on the bed surface of the bed body,
wherein the bed body has a plurality of leg sections that have contact with a surface on which the bed body is to be installed,
wherein the leg sections are provided with caster mechanisms, respectively, and
wherein the load detector has load cells that are incorporated into the caster mechanisms of one or more leg sections among the leg sections, and measure a strain caused by loads applied from the bed surface to the caster mechanisms.

2. The bed with a load detection function according to Claim 1,
wherein the bed body has a bottom frame supported via the leg sections on an installation surface,
wherein the caster mechanism has a wheel that rotates around a horizontal axis, and a turning portion that turns the wheel around a vertical axis, and has a structure in which an upper end opening portion of a tube portion is closed by a top portion in a state where a shaft portion protruding from an upper portion of the turning portion is inserted into the tube portion provided at the bottom frame so as to be movable in an axis direction, and
wherein the load cell is arranged in a state where the load cell is sandwiched between the shaft portion and the top portion inside the tube portion.

3. The bed with a load detection function according to Claim 2,
wherein the load cell is arranged above a position where the tube portion is connected to the bottom frame.

4. The bed with a load detection function according to Claim 2 or 3,
wherein any one of a lower end surface of the load cell and an upper end surface of the shaft portion has a flat surface, and the other has a convex surface, and the flat surface and the convex surface are brought into contact with each other on a central axis.

5. The bed with a load detection function according to any one of Claims 2 to 4,
wherein a bush that guides the shaft portion so as to be movable in the axis direction is arranged between an inner peripheral surface of the tube portion and an outer peripheral surface of the shaft portion.

6. The bed with a load detection function according to any one of Claims 1 to 5,
wherein four load cells are provided as the load cells, and
wherein the load cells are respectively incorporated into caster mechanisms of four leg sections arranged at four corners of the bed body that are in a mutually symmetrical positional relationship.

7. A load detector for a bed that is attached to a bed body having a plurality of leg sections, thereby measuring a change in a load applied to a bed surface of the bed body, and detecting a state of a user on the bed surface of the bed body, comprising:
a load cell that measures strain caused by the load applied thereto,
wherein the load cells are configured so as to be capable of being incorporated into caster mechanisms provided at the leg sections.

8. The load detector for a bed according to Claim 7,
wherein the caster mechanism has a wheel that rotates around a horizontal axis, and a turning portion that turns the wheel around a vertical axis, and has a structure in which an upper end opening portion of a tube portion is closed by a top portion, in a state that is a shaft portion protruding from an upper portion of the turning portion, is inserted into the tube portion provided at a bottom frame of the bed body so as to be movable in an axis direction, and
wherein the load cell is arranged in a state that is the load cell is sandwiched between the shaft portion and the top portion inside the tube portion.

9. The load detector for a bed according to Claim 8,
wherein the load detecting part is arranged above a position where the tube portion is connected to the bottom frame.

10. The load detector for a bed according to Claim 8 or 9,
wherein any one of a lower end surface of the load detecting part and an upper end surface of the shaft portion has a flat surface, and the other has a convex surface, and the lower end surface of the load detecting part has a flat surface or a convex surface so that the flat surface and the convex surface are brought into contact with each other on a central axis.

11. The load detector for a bed according to any one of Claims 8 to 10,
wherein the caster mechanism includes a bush that is arranged between an inner peripheral surface of the tube portion and an outer peripheral surface of the shaft portion to guide the shaft portion so as to be movable in the axis direction.

12. The load detector for a bed according to any one of Claims 7 to 11,
wherein four load cells are provided as the load cells, and
wherein the load cells are configured so as to be respectively arranged at caster mechanisms of four leg sections arranged at four corners of the bed body that are in a mutually symmetrical positional relationship.
